# EUROPÄISCHE PATENTSCHRIFT

(11) **EP 2 335 970 B1**
(45) Veröffentlichungstag und Bekanntmachung des Hinweises auf die Patenterteilung: **23.12.2015**
(21) Anmeldenummer: 11002093.0
(22) Anmeldetag: 10.02.2006
(51) Int. Cl.: B60N 2/36, B60N 2/44

(54) **Vorrichtung zur Verriegelung und Entriegelung und Kraftfahrzeugsitz mit einer solchen Vorrichtung**
Device for locking and unlocking and automotive vehicle seat with such a device
Dispositif pour verrouiller et déverrouiller et siège de véhicule automobile avec un tel dispositif

(30) Priorität: 11.02.2005 DE 102005006565
(43) Veröffentlichungstag der Anmeldung: 22.06.2011
(62) Teilanmeldung aus: 06708191.9
(73) Patentinhaber: Johnson Controls GmbH, 51399 Burscheid (DE)
(72) Erfinder: Willing, Thomas, 50825 Köln (DE); Haida, Stefan, 42855 Remscheid (DE); Pastoors, Alfred, 50823 Köln (DE)
(74) Vertreter: Wolff, Felix

(56) Entgegenhaltungen:
- EP-A- 0 669 437
- EP-A- 0 839 685
- EP-A- 1 160 121
- EP-A- 1 505 230
- WO-A1-01/23207
- DE-A1- 4 405 346
- DE-A1- 4 405 698
- DE-A1- 10 058 044
- DE-A1- 10 142 486
- DE-A1- 10 310 848
- DE-U1- 29 811 388
- GB-A- 2 283 782
- US-A- 5 020 838
- US-A- 5 547 242
- US-A- 5 855 414
- PATENT ABSTRACTS OF JAPAN Bd. 008, Nr. 61 (M-284), 23. März 1984 (1984-03-23) -& JP 58, 211925, A, (NISSAN JIDOSHA KK), 9. Dezember 1983 (1983-12-09)

## Beschreibung

Die vorliegende Erfindung betrifft eine Vorrichtung zur Verriegelung und Entriegelung eines Verriegelungsbolzens einer Lehne eines Kraftfahrzeugsitzes, mit einem Verriegelungshaken und einem Betätigungsbauteil, wobei der Verriegelungshaken in einer die Verriegelung sichernden Verriegelungsposition kraft- und/oder formschlüssig mit dem Verriegelungsbolzen zusammenwirkt und durch Drehen des Betätigungsbauteils in eine die Verriegelung nicht sichernde Entriegelungsposition drehbar ist, wobei der Verriegelungshaken zumindest teilweise mit einem Kunststoff ummantelt ist und einen Kraftfahrzeugsitz mit einer solchen Vorrichtung.

Moderne Sitzanlagen in Fahrzeugen, insbesondere in Kraftfahrzeugen, sollten gute Komforteigenschaften und eine hohe Flexibilität aufweisen, beispielsweise bezüglich der Möglichkeit, das zur Verfügung stehende Ladevolumen mit wenigen Handgriffen und daher sehr einfach zu vergrößern, indem die Sitzanlage zusammengeklappt wird. Dabei muss für den Endkunden, nach ebenso einfach durchführbarer Wiederherstellung des Ausgangszustandes der Sitzanlage, immer eine sicher verriegelte Sitzanlage gewährleistet sein, damit im Falle eines Unfalles die auftretenden Crashlasten über die Sitz-Verriegelungen aufgenommen werden können. Vorrichtungen nach dem Oberbegriff des Anspruchs 1 sind z.B. aus EP 0 669 437 A1, GB 2 283 782 A, US 5 020 838 A bekannt.

Aufgabe der Erfindung ist, eine einfach bedienbare Vorrichtung zur Verriegelung und Entriegelung, insbesondere der Lehne eines Sitzes, insbesondere eines Kraftfahrzeugs, zu schaffen, die eine für den Nutzer größere Sicherheit aufweist, insbesondere bei einem Crash, die konstante Verriegelungskräfte über alle Temperaturbereiche gewährleistet, bei der Toleranzen, insbesondere Bauteil- und Fertigungstoleranzen, ausgeglichen werden, und die ein minimales Spiel aufweist und daher geräuscharm ist.

Die Aufgabe wird gelöst mit einer Vorrichtung gemäß Patentanspruch 1..

Bevorzugte Ausführungsformen sind in den Unteransprüchen 2 bis 11 angegeben.

Bevorzugt umfasst die Vorrichtung ein Signalmittel, mittels dem sie ein mechanisches Signal abgeben und/oder entgegen nehmen kann.

Dadurch ermöglicht die erfindungsgemäße Vorrichtung, zusätzliche externe mechanische Signale, beispielsweise Positionssignale, Belegungssignale oder Verriegelungszustände der erfindungsgemäßen Vorrichtung an weitere Vorrichtungen abzugeben, oder Positionssignale, Belegungssignale oder Verriegelungszustände von weiteren Vorrichtungen aufzunehmen.

Bevorzugt ist das Signalmittel dem Betätigungsbauteil parallel geschaltet und wirkt mit diesem zusammen. Eine Betätigung des Betätigungsbauteils wird daher unmittelbar am Signalmittel angezeigt. Andererseits wirkt eine Betätigung des Signalmittels unmittelbar auf das Betätigungsbauteil.

In einer bevorzugten Ausführungsform beinhaltet das mechanische Signal die Verriegelungsposition und/oder die Entriegelungsposition des Verriegelungshakens, so dass dem Nutzer angezeigt wird, ob die Vorrichtung sicher verriegelt ist.

In einer ebenfalls bevorzugten Ausführungsform ist die Vorrichtung mit einer weiteren Vorrichtung, insbesondere einer erfindungsgemäßen Vorrichtung, parallel geschaltet, wobei das mechanische Signal die Vorrichtungen synchronisiert.

Der Fachmann versteht, dass die weitere Vorrichtung, mit der die erfindungsgemäße Vorrichtung synchronisiert wird, eine beliebige Vorrichtung sein kann, deren Zustand in Abhängigkeit von der Verriegelung der erfindungsgemäßen Vorrichtung verändert werden soll, oder in Abhängigkeit von deren Zustand die erfindungsgemäße Vorrichtung verriegelt oder entriegelt werden soll.

Die Synchronisation beinhaltet also nicht nur ein gleichzeitiges Betätigen von zumindest zwei Vorrichtungen, von denen zumindest eine Vorrichtung eine erfindungsgemäße Vorrichtung ist, sondern auch die Überlagerung von Signalen, wie beispielsweise Positionssignalen, Belegungssignalen oder Verriegelungszustände einer gegebenenfalls nicht erfindungsgemäßen Vorrichtung.

Vorzugsweise umfasst die Vorrichtung ein Anzeigemittel, mittels dem das mechanische Signal anzeigbar ist, so dass ein Nutzer unmittelbar reagieren kann, wenn eine nicht sichere Verriegelung angezeigt wird.

Bevorzugt ist der Verriegelungshaken durch die Kraft eines Kraftmittels von der Verriegelungsposition reversibel in die Entriegelungsposition drehbar, so dass die Verriegelungsposition mittels der Kraft des Kraftmittels gehalten wird.

Das Kraftmittel ist besonders bevorzugt eine Feder, mittels der der Verriegelungshaken mit dem Betätigungsbauteil gekoppelt ist.

Bevorzugt weist die Vorrichtung eine Verriegelungsklinke auf, die von einer Freigabeposition in eine Sicherungsposition reversibel verstellbar ist, und die in ihrer Sicherungsposition den Verriegelungshaken in seiner Verriegelungsposition sichert, insbesondere bei einem Crash. Die Verriegelungsklinke ermöglicht einen optimalen Kraftfluss und daher eine große Lastaufnahmefähigkeit der erfindungsgemäßen Vorrichtung.

Bevorzugt umfasst das Betätigungsbauteil ein Verstellmittel, welches beim Betätigen erst nach einer Drehung um einen Sicherheitswinkel mit der Verriegelungsklinke zusammenwirkt, so dass eine ungewollte Auslenkung des Betätigungsbauteils durch starke Beschleunigungskräfte, beispielsweise durch Erschütterungen oder bei einem Unfall, nicht zum Verstellen der Verriegelungsklinke in die Freigabeposition führt. Das Betätigungsbauteil ist vorzugsweise massenausgeglichen und ebenfalls bevorzugt im Wesentlichen scheibenförmig ausgebildet. Beispielsweise verläuft die Drehachse, um die das Betätigungsbauteil betätigt wird, durch ihren Schwerpunkt. Dadurch ist das Betätigungsbauteil besonders unempfindlich gegenüber Querkraftbeschleunigungen.

Das Drehen des Verriegelungshakens von der Entriegelungsposition in die Verriegelungsposition ist unabhängig vom Verstellen der Verriegelungsklinke von der Freigabeposition in die Sicherungsposition möglich, insbesondere da der Verriegelungshaken und die Verriegelungsklinke nicht miteinander gekoppelt sind, beispielsweise durch eine Feder. In diesem Fall ist der Verriegelungshaken jedoch nicht in der Verriegelungsposition verriegelt.

Bevorzugt ist das Verstellen der Verriegelungsklinke von der Freigabeposition in die Sicherungsposition durch ein mechanisches Signal einer weiteren Vorrichtung steuerbar.

Da das Signalmittel dem Betätigungsbauteil parallel geschaltet ist, zeigt es die Position der Verriegelungsklinke an. Dadurch ist mittels dem mechanischen Signal entweder eine nichtsichere Verriegelung anzeigbar, oder die Verriegelung kann gewollt mittels einem mechanischen Signal verhindert werden, beispielsweise wenn eine weitere Vorrichtung nicht verriegelt ist. Außerdem ermöglicht das Signalmittel die Anzeige einer sicheren Verriegelung bzw. gewollten Entriegelung der Vorrichtung, beispielsweise um die erfindungsgemäße Vorrichtung mit anderen Vorrichtungen gleichzeitig zu Entriegeln.

Bevorzugt umfasst die Vorrichtung ein Schiebeelement, mittels dem das Spiel zwischen dem Verriegelungsbolzen und dem Verriegelungshaken in der Verriegelungsposition reduzierbar ist. Dadurch klappert die Vorrichtung insbesondere bei Fahrt über unebenes Gelände nicht. Außerdem ermöglicht das Schiebeelement ein für den Nutzer einfaches und gleichmäßiges Verriegeln der Vorrichtung.

Vorzugsweise umfasst das Schiebeelement ein zweites Kraftmittel, mittels dessen Kraft es in der Verriegelungsposition des Verriegelungshakens mit dem Verriegelungsbolzen zusammenwirkt, wobei die Kraft des zweiten Kraftmittels im wesentlichen unabhängig von der Umgebungstemperatur ist. Das Verriegeln ist daher auch bei extremen Temperaturen im wesentlichen gleichbleibend gleichmäßig möglich.

Erfindungsgemäß ist der Verriegelungshaken zumindest teilweise ummantelt, besonders bevorzugt mittels einem Kunststoff. Dadurch wird eine federnde Wirkung beim Verriegeln erzielt, die ein leichtes und sicheres Einfallen der Verriegelungsklinke gewährleistet.

Erfindungsgemäß weist die Ummantelung im Kontaktbereich des Verriegelungshakens mit dem Verriegelungsbolzen eine Prägung auf, mittels denen das Spiel zwischen dem Verriegelungsbolzen und dem Verriegelungshaken reduzierbar ist, insbesondere in der Verriegelungsposition, wodurch eine weitere Geräuschreduzierung der Vorrichtung bewirkt wird.

Ein weiterer Gegenstand der vorliegenden Erfindung ist ein Kraftfahrzeugsitz mit einer solchen Vorrichtung Die erfindungsgemäße Vorrichtung gewährleistet eine über alle Temperaturbereiche gleichbleibend gleichmäßige Verriegelung, ist sehr leicht und leise bedienbar und klappert auch während der Fahrt nicht.

Im folgenden wird die Erfindung anhand von Figuren beschrieben. Die Figuren sind lediglich beispielhaft und grenzen den allgemeinen Erfindungsgedanken nicht ein.
- **Figur 1**: zeigt eine Ausführungsform einer erfindungsgemäßen Vorrichtung mit einem Verriegelungshaken.
- **Figur 2**: zeigt einen Schnitt durch die Vorrichtung in der Ausführungsform der **Figur 1****.**
- **Figur 3**: zeigt eine Seitenansicht einer erfindungsgemäßen Vorrichtung mit einem Schiebeelement.
- **Figur 4**: zeigt eine weitere Ausführungsform eines Schiebeelementes einer erfindungsgemäßen Vorrichtung.
- **Figur 5**: zeigt einen Ausschnitt aus einer erfindungsgemäßen Vorrichtung, wobei sich der Verriegelungshaken in der Verriegelungsposition befindet.
- **Figur 6**: zeigt den ummantelten Verriegelungshaken mit einer Prägung in einem Kontaktbereich des Verriegelungshakens mit dem Verriegelungsbolzen.
- **Figur 7**: zeigt die Ausführung der erfindungsgemäßen Vorrichtung der **Figur 1** mit einem Signalmittel.
- **Figur 8**: zeigt einen Anwendungsfall der erfindungsgemäßen Vorrichtung mit einem Signalmittel 7.

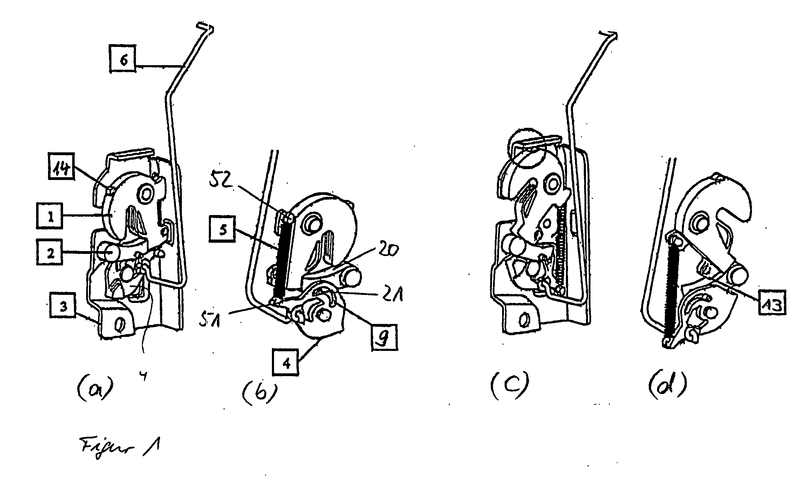

**Figur 1** zeigt eine Ausführungsform einer erfindungsgemäßen Vorrichtung mit einem Verriegelungshaken 1. In den Darstellungen **a** und **b** befindet sich der Verriegelungshaken 1 in der Verriegelungsposition V, während er sich in den Darstellungen **c** und **d** in der Entriegelungsposition E befindet. In der Verriegelungsposition V wirkt der Verriegelungshaken 1 mit der Verriegelungsklinke 2 form- und/oder kraftschlüssig zusammen, so dass der Verriegelungshaken 1 in dieser Verriegelungsposition V gesichert ist. Ein Betätigungsbauteil 4 wird durch Betätigen eines Betätigungsmittels 6 gedreht. Das Betätigungsbauteil 4 weist ein Verstellmittel 9, hier eine Kulisse, auf, die mit der Verriegelungsklinke 2 zusammenwirkt, hier mittels einem Nocken 21, wodurch die Verriegelungsklinke 2 von einer Sicherungsposition S in der der Verriegelungshaken 1 durch die Verriegelungsklinke 2 in der Verriegelungsposition V gesichert ist, in eine Freigabeposition F gedreht wird, in der der Verriegelungshaken 1 nicht mehr durch die Verriegelungsklinke 2 in der Verriegelungsposition V gesichert ist. Im Folgenden werden die Begriffe Verstellmittel 9 und Kulisse synonym verwendet. Mittels der Kraft eines Kraftmittels 5, hier einer (Zug-) Feder, dessen erstes Ende 51 am Betätigungsbauteil 4 vorgesehen ist, und dessen zweites Ende 52 am Verriegelungshaken 1 vorgesehen ist, kann der Verriegelungshaken 1 entlang der Kontur 20 der Verriegelungsklinke 2 in die Entriegelungsposition E gezogen werden. Im Folgenden werden die Begriffe Kraftmittel 5 und Feder synonym verwendet. Der Verriegelungshaken 1, die Verriegelungsklinke 2 sowie das Betätigungsbauteil 4 sind drehbar an einer Grundplatte 3 angeordnet. In der Entriegelungsposition E liegt der Verriegeiungshaken 1 mit einem zweiten Anschlag 14 an der Grundplatte 3 an. Außerdem weist der Verriegelungshaken 1 einen ersten Anschlag 13 auf, mit dem er in der Verriegelungsposition V gegebenenfalls zeitweise an der Grundplatte 3 anliegt.

Die dargestellte Anordnung von Verriegelungshaken 1 und Verriegelungsklinke 2 ermöglicht einen sehr guten Kraftfluss und daher eine hohe Lastaufnahme, insbesondere bei einem Crash, wobei gleichzeitig ein sehr guter Toleranzausgleich im Bereich von ca. +/-3mm - +/- 7mm möglich ist. Sie ist bezüglich ihres Crashverhaltens sehr robust, insbesondere hinsichtlich multidirektionaler Beschleunigungen.

Die Masse des Betätigungsbauteils 4 ist ausgeglichen verteilt und das Betätigungsbauteil ist im Wesentlichen scheibenförmig, so dass das Betätigungsbauteil 4 unempfindlich gegenüber Querkraftbeschleunigungen ist. Darüber hinaus ist das Betätigungsbauteil 4 auf die Verriegelungsklinke 2 so abgestimmt, dass das Betätigungsbauteil 4 die Verriegelungsklinke 2 mittels der Kulisse 9 erst nach Drehen um einen Sicherheitswinkel, der bevorzugt 2°-15° beträgt, freigibt, so dass die Verriegelungsklinke 2 in die Freigabeposition gedreht wird. Daher ist sichergestellt, dass ein ausreichender Leerhub vorhanden ist, so dass die Verriegelungsklinke 2 den Verriegelungshaken 1 nicht ungewollt, beispielsweise aufgrund einer großen Belastung, insbesondere bei einem Crash, freigibt. Das massenausgeglichene, scheibenförmige Betätigungsbauteil 4 ist unempfindlich gegenüber multidirektionalen Beschleunigungen und gewährleistet daher eine sehr sichere Verriegelung des Verriegelungshakens 1 in der Verriegelungsposition V.

Aufgrund der Drehung des Betätigungsbauteils 4 wird die leicht vorgespannte Feder 5 weiter gespannt und zieht den Verriegelungshaken 1, nach dem die Verriegelungsklinke 2 in die Freigabeposition F verstellt wurde, entlang der Kontur 20 der Verriegelungsklinke 2 in die Entriegelungsposition E. Die korrespondierende Kontur des Verriegelungshakens 1 ist mit der Kontur 20 der Verriegelungsklinke 2 so abgestimmt, dass die Verriegelungsklinke 2 ihre Freigabeposition F in der Entriegelungsposition E des Verriegelungshakens 1 beibehält, wenn der Verriegelungshaken 1 von der Entriegelungsposition E in die Verriegelungsposition V gedreht wird.

Die Feder 5 koppelt den Verriegelungshaken 1 mit dem Betätigungsbauteil 4. Die Verriegelungsklinke ist dagegen nicht federbelastet. Das Drehen des Verriegelungshakens 1 von der Entriegelungsposition E in die Verriegelungsposition V ist so unabhängig von dem Sichern des Verriegelungshakens 1 mittels der Verriegelungsklinke 2, also unabhängig vom Drehen der Verriegelungsklinke 2 von der Freigabeposition F in die Sicherungsposition S, und daher auch unabhängig von dem Drehen des Betätigungsbauteils 4 möglich. Der Verriegelungshaken bleibt dann jedoch ungesichert.

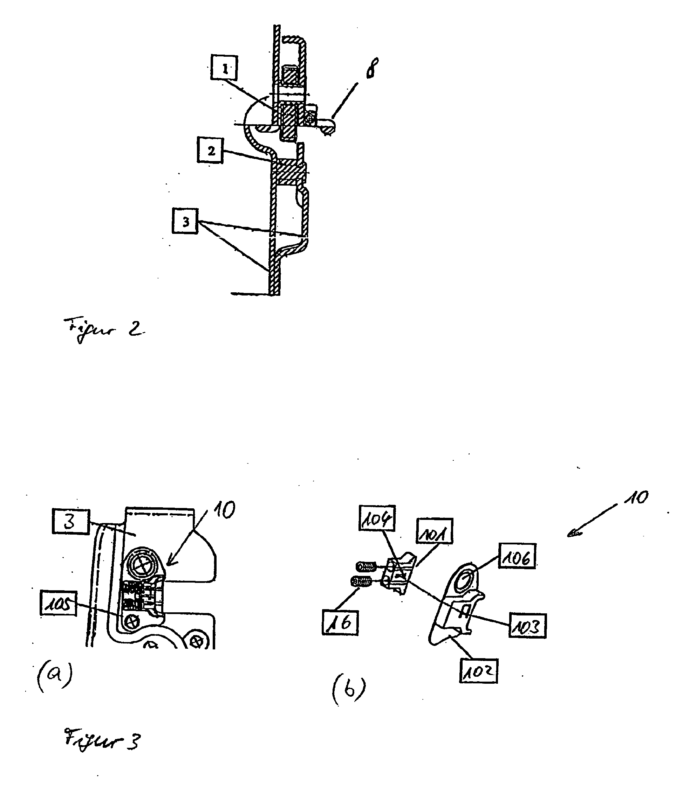

**Figur 2** zeigt einen Schnitt durch die Vorrichtung in der Ausführungsform der **Figur 1**. Die Vorrichtung ist bezüglich ihrer Breite, die mittels dem Pfeil 15 angedeutet ist, sehr kompakt. Die Abstützwirkung gegen Verdrehen des Verriegelungshakens 1 und der Verriegelungsklinke 2 ist sehr groß, insbesondere bei einem Crash, da der Verriegelungshaken 1 und die Verriegelungsklinke 2 nahe der Grundplatte 3 angeordnet sind.

**Figur 3** zeigt eine Seitenansicht einer erfindungsgemäßen Vorrichtung mit einem Schiebeelement 10. Das Schiebeelement 10 ist zumindest teilweise aus einem Kunststoff gefertigt und mittels einem zweiten Kraftmittel 16 federbelastet. Mittels dem Schiebeelement 10 wird das Spiel zwischen dem in der Verriegelungsposition V befindlichen Verriegelungshaken 1 und dem Verriegelungsbolzen 8 reduziert, so dass die Vorrichtung sehr geräuscharm ist und nicht klappert.

Als zweites Kraftmittel 16 wird eine Stahlfeder verwendet, da die Kraft einer Stahlfeder im Vergleich zu herkömmlich verwendeten Gummielementen im wesentlichen unabhängig von der Umgebungstemperatur ist. Um eine unangenehme Geräuschentwicklung, insbesondere durch Reibung von Stahl gegeneinander, zu vermeiden, ist das Schiebeelement 10 zumindest im Bereich des Verriegelungsbolzens 8 aus einem Kunststoff gefertigt. Der Federweg des zweiten Kraftmittels ist sehr klein und beträgt ca. 1 - 5mm, vorzugsweise ca. 3mm. Daher erfolgt die Verriegelung sehr gleichmäßig und für den Nutzer sehr einfach durchführbar.

Die Ausführungsform des Schiebeelementes 10 der **Figuren 3a** **- b** weist zwei parallel zueinander angeordnete und daher parallel geschaltete zweite Kraftmittel 16, hier Druckfedern, auf. Im Folgenden werden daher die Begriffe zweites Kraftmittel 16 und Druckfeder synonym verwendet. Das Schiebeelement 10 weist ein Aufnahmebauteil 101 zumindest teilweise aus Kunststoff 101 auf, in dem die Druckfedern 16 angeordnet sind. Das Aufnahmebauteil 101 ist an einem Halteblech 102 angeordnet, das baufest an der Grundplatte 3 vorgesehen ist, und wird entlang dem Halteblech 102 in einem Wirkbereich sehr gleichmäßig geführt, der in etwa dem vierfachen Bolzendurchmesser des Verriegelungsbolzens beträgt. Das Halteblech weist einen Vorsprung 103 auf, der bevorzugt angekantet ist, und der mit einer Ausnehmung 104 des Aufnahmebauteils 101 zusammenwirkt und das Aufnahmebauteil 101 in einer vorgespannten, geräuscharmen Position hält. Außerdem sichert der Vorsprung 103 das Aufnahmebauteil 101 in der Entriegelungsposition E des Verriegelungshakens 1 gegen Herausfallen aus dem Halteblech 102.

Das Halteblech 102 wird mit den Druckfedern und dem Aufnahmebauteil 101 beispielsweise über eine Verbindungsprägung 105 an der Grundplatte 3 vormontiert und anschließend bevorzugt in einem Befestigungspunkt 106, insbesondere an der Sitzstruktur, fixiert.

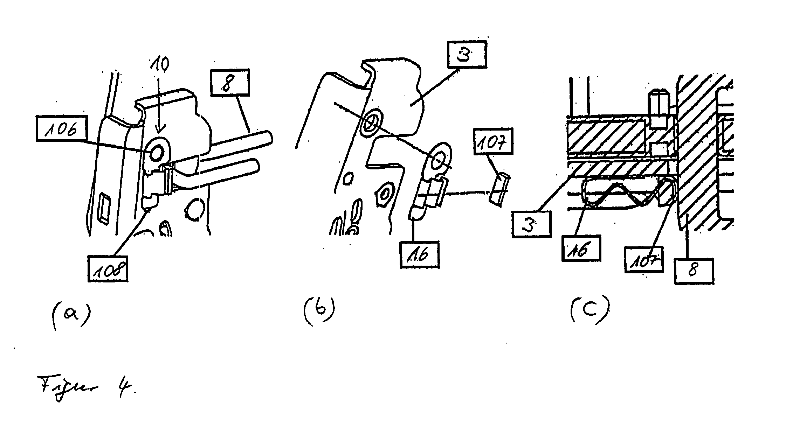

**Figur 4** zeigt eine weitere Ausführungsform eines Schiebeelementes 10 einer erfindungsgemäßen Vorrichtung. Das Schiebeelement 10 weist anstelle der Druckfeder der **Figuren 3a** - **b** ein gewelltes Federblech 16 als zweites Kraftmittel auf, welches über Klemmlaschen 108 an der Grundplatte 3 der Vorrichtung fixiert ist. Im Folgenden werden daher die Begriffe zweites Kraftmittel 16 und Federblech synonym verwendet. Das Schiebeelement 10 weist ein Kunststoffbauteil 107 im Bereich zwischen dem Federblech 16 und dem Verriegelungsbolzen 8 auf, um Geräusche durch Reibung des Federbleches 16 gegen den Verriegelungsbolzen 8 zu unterbinden. Aufgrund der robusten Bauweise wird ein gleichmäßiges Eindrücken des Federbleches 16 gewährleistet, wobei wiederum ein Wirkbereich von etwa dem vierfachen des Bolzendurchmesser des Verriegelungsbolzens 8 vorgesehen ist. Die Fixierung erfolgt mittels dem Befestigungspunkt 106, insbesondere an der Sitzstruktur.

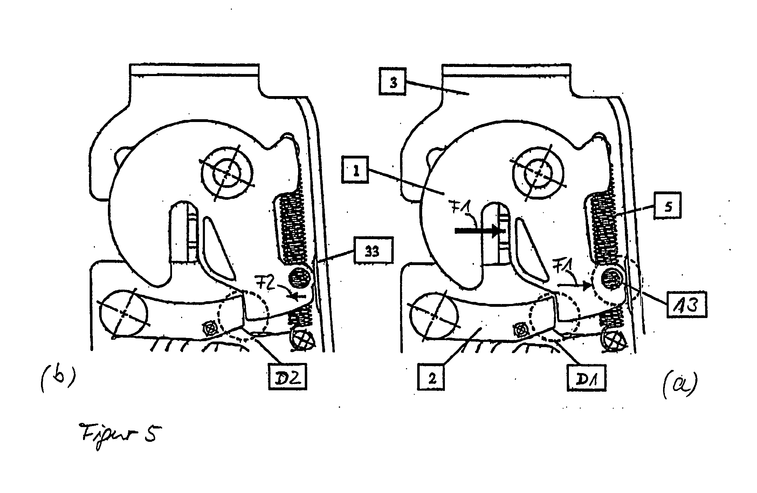

**Figur 5** zeigt einen Ausschnitt aus einer erfindungsgemäßen Vorrichtung, wobei sich der Verriegelungshaken 1 in der Verriegelungsposition V befindet. Der Verriegelungshaken 1 ist ummantelt, wobei die Ummantelung bevorzugt aus Kunststoff ist. Während des Verriegelns, d. h. während des Drehens des Verriegelungshakens 1 von der Entriegelungsposition E in die Verriegelungsposition V, wirkt der Verriegelungsbolzen 8 mit dem Verriegelungshaken 1 zumindest zeitweise zusammen, und der erste Anschlag 13 des Verriegelungshakens 1 wirkt mit einem Endanschlag 33 der Grundplatte 3 zumindest zeitweise zusammen. Der Verriegelungshaken 1 sowie der Endanschlag 33 weisen eine Prägung 130 in den Kontaktbereichen des Verriegelungshakens 1 mit dem Verriegelungsbolzen 8 bzw. des ersten Anschlags 13 mit dem Endanschlag 33 auf. Dabei wird der Verriegelungshaken 1 jeweils aufgrund der auf ihn während des Verriegelns wirkenden Kräfte, die mittels einem Pfeil F1 angedeutet sind, in diesen Kontaktbereichen verformt. Die Verformung erflogt elastisch, und zwar einerseits aufgrund der Form des Verriegelungshakens 1 bzw. des ersten Anschlags 13 des Verriegelungshakens 1 und andererseits aufgrund der Elastizität des Kunststoffes. Die rückwirkende Verformungskraft ist hier mittels einem Pfeil F2 angedeutet.

Aufgrund des größeren Spaltmaßes D1 während der Wirkung der Kraft F1 ist einerseits das Drehen der Verriegelungsklinke 2 von der Freigabeposition F in die Sicherungsposition S leicht und sicher möglich. Andererseits ist aufgrund der rückwirkenden Verformungskraft F2 in der Verriegelungsposition V des Verriegelungshakens 1 das Spaltmaß D2 zwischen der Verriegelungsklinke 2 und dem Verriegelungshaken 1 sehr klein, wodurch Klappergeräusche vermieden werden.

Das Spaltmaß D2 wird in der Verriegelungsposition V außerdem durch die Wirkung des ersten Kraftmittels 5 verringert, oder ist sogar nicht mehr vorhanden.

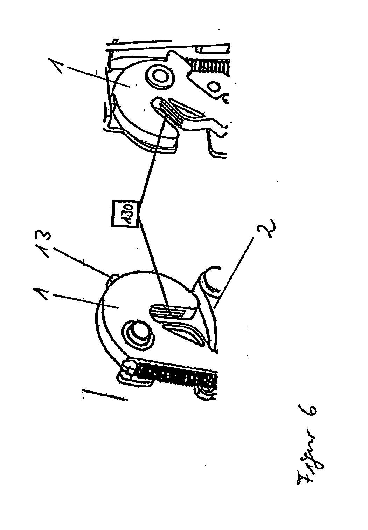

**Figur 6** zeigt die Prägung 130 der Ummantelung des Verriegelungshakens 1 im Kontaktbereich des Verriegelungshakens 1 mit dem Verriegelungsbolzen 8. Der Verriegelungshaken 1 weist ein Hakenmaul 17 auf, das beidseitig mit der Prägung 130 versehen ist. Durch die Prägung 130 ist das Spiel zwischen dem Verriegelungshaken 1 und dem Verriegelungsbolzen 8 minimiert.

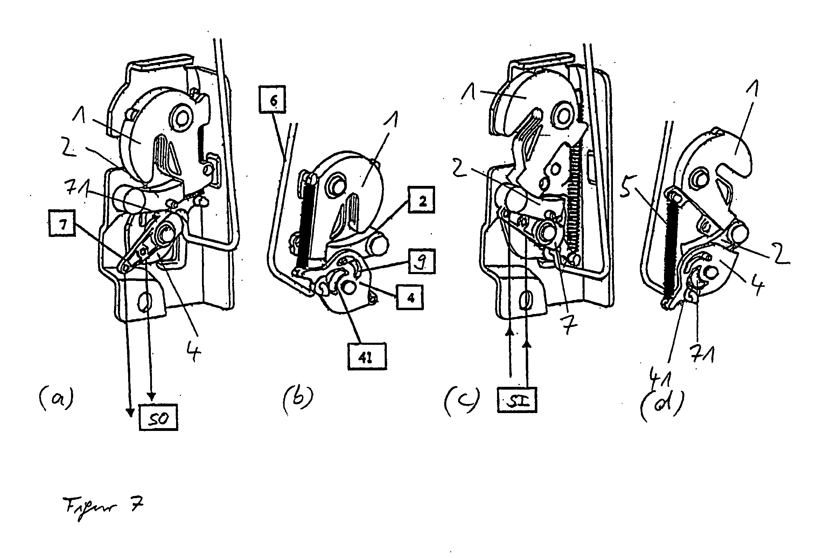

**Figur 7** zeigt die Ausführung der erfindungsgemäßen Vorrichtung der Figur 1 mit einem Signalmittel 7. Das Signalmittel 7 ermöglicht das Abgeben und/oder Entgegennehmen von mechanischen Signalen SO, SI wie beispielsweise Positions-, Belegungs- oder Verriegelungszustände.

Das Signalmittel 7 ist parallel zum Betätigungsbauteil 4 angeordnet und diesem daher parallel geschaltet. Es ist optional und kann daher nachgerüstet werden. Das Signalmittel 7 wirkt mit dem Betätigungsbauteil 4 zusammen, indem eine Anformung 71 des Signalmittels 7 in eine Ausnehmung 41 des Betätigungsbauteils 4 eingreift. Ein mechanisches, positives oder negatives Signal SO, SI kann beispielsweise mittels einem oder mehreren Bowdenkabeln, flexiblen oder biegesteifen Drähten, Stangen oder Microschaltern, die an dem Signalmittel 7 angeordnet sind, an die Vorrichtung abgegeben oder entgegen genommen werden.

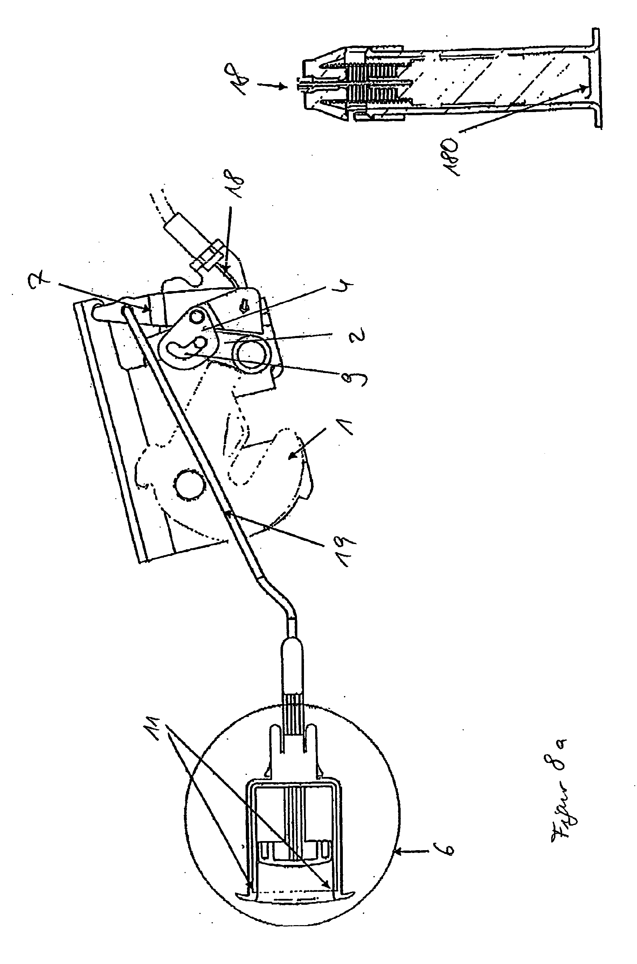

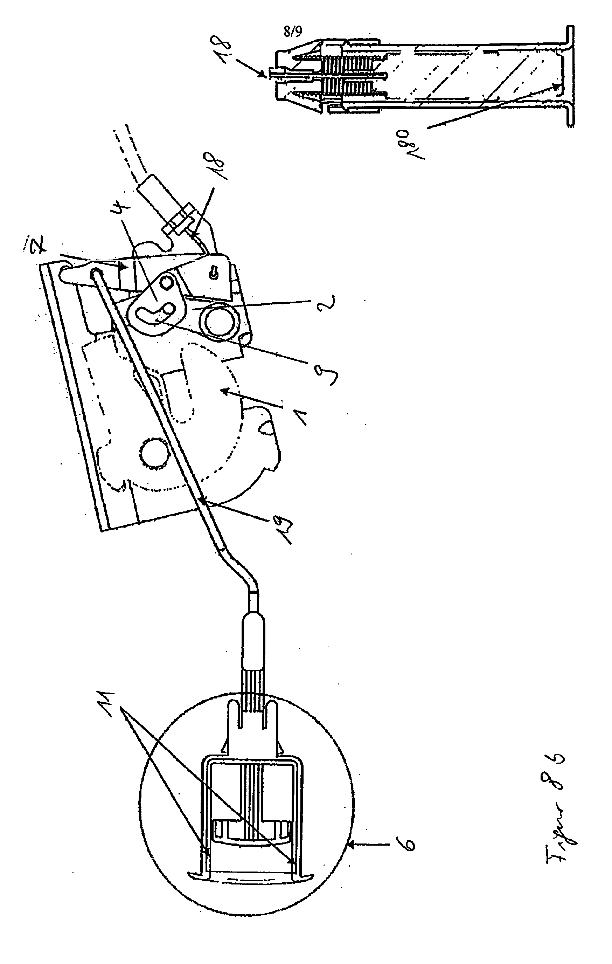

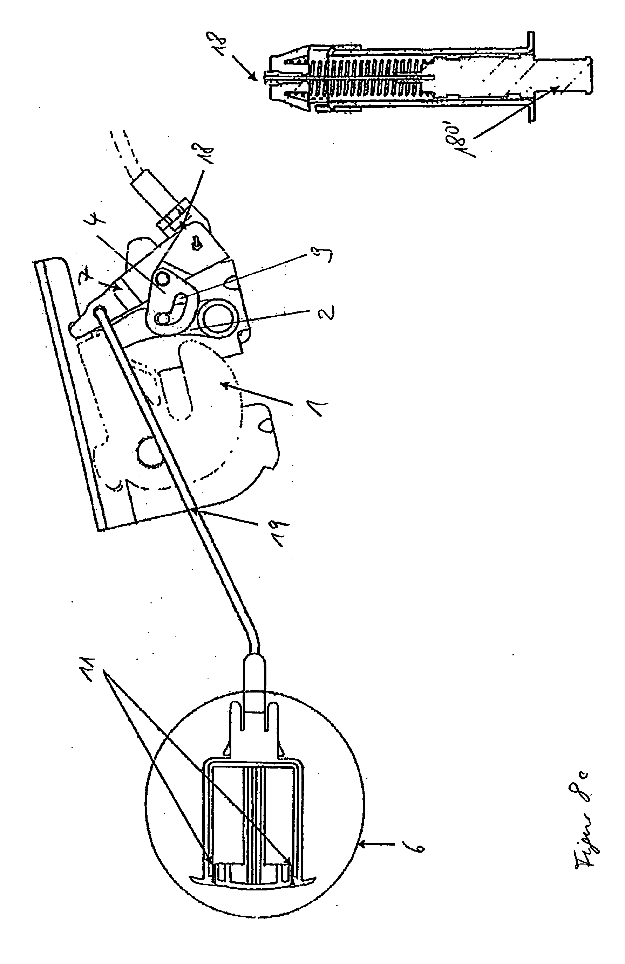

In einer bevorzugten Ausführungsform bewirkt das mechanische Signal SO, SI, dass der Verriegelungshaken zwar von der Entriegelungsposition E in die Verriegelungsposition V gedreht wird, dass jedoch das Betätigungsbauteil 4 nicht gedreht wird, beispielsweise weil die Verriegelungsklinke 2 den Verriegelungshebel 1 nicht sichert. Mittels einem Anzeigemittel 11, siehe **Figur 8**, kann dem Nutzer eine solche nicht vollständige Verriegelung angezeigt werden. Eine solche nicht vollständige Verriegelung ist beispielsweise eine nicht gesicherte Lehne eines Fahrzeugsitzes.

Das Betätigungsbauteil 4 umfasst das Verstellmittel 9, welches beim Betätigen mittels dem Betätigungsmittel 6 erst nach einer Drehung um einen Sicherheitswinkel mit der Verriegelungsklinke 2 zusammenwirkt. Das Drehen des Verriegelungshakens 1 von der Entriegelungsposition E in die Verriegelungsposition V ist unabhängig vom Verstellen der Verriegelungsklinke 2 von der Freigabeposition F in die Sicherungsposition S möglich, ohne dass der Verriegelungshaken gesichert ist.

Die Darstellungen c und **b** zeigen die Verriegelungsposition V des Verriegelungshakens 1, die beispielsweise als mechanisches Signal SO mittels einem Bowdenkabel 18, siehe **Figur 8**, einer weiteren Vorrichtung, insbesondere einer weiteren erfindungsgemäßen Vorrichtung, signalisiert werden kann, beispielsweise um die Betätigung der Vorrichtungen zu synchronisieren, so dass die Betätigung gleichzeitig erfolgt.

Die Darstellung a zeigt die Entriegelungsposition E des Verriegelungshakens 1, die beispielsweise einer anderen Vorrichtung angezeigt werden kann, beispielsweise einem Anzeigemittel 11, um dem Nutzer den nicht gesicherten Zustand mitzuteilen.

**Figur 8** zeigt einen Anwendungsfall der erfindungsgemäßen Vorrichtung mit einem Signalmittel 7. Die Vorrichtung ist eine Lehnenverriegelung eines Fahrzeugsitzes. Das Signalmittel 7 gibt ein mechanisches Signal SO an eine weitere Vorrichtung, hier eine Drehmomentsperre eines Mittellagers des Fahrzeugsitzes, ab, bzw. nimmt ein mechanisches Signal Sl von der weiteren Vorrichtung entgegen. Die Vorrichtung weist ein Anzeigemittel 11 auf, um dem Nutzer einen nicht verriegelten Zustand des Lehnenschlosses und/oder der Drehmomentsperre anzuzeigen. Die Begriffe Vorrichtung und Lehnenschloss sowie die Begriffe weitere Vorrichtung und Drehmomentsperre werden im Folgenden jeweils synonym behandelt. Die Darstellungen **a - c** zeigen das Betätigungsmittel 6 nur schematisch.

Darstellung **a** zeigt eine Schnittdarstellung des Lehnenschlosses und der Drehmomentsperre im Mittellager im nicht verriegelten Zustand des Lehnenschlosses und im nicht verriegelten Zustand 180 der Drehmomentsperre. Das Anzeigemittel 11 signalisiert eine nicht sicher verriegelte Rückenlehne.

Darstellung **b** zeigt eine Schnittdarstellung des Lehnenschlosses und der Drehmomentsperre im Mittellager im verriegelten Zustand des Lehnenschlosses und im nicht verriegelten Zustand 180 der Drehmomentsperre. Das Anzeigemittel 11 signalisiert eine nicht sicher verriegelte Rückenlehne.

Darstellung c zeigt eine Schnittdarstellung des Lehnenschlosses und der Drehmomentsperre im Mittellager im verriegelten Zustand des Lehnenschlosses und im verriegelten Zustand der Drehmomentsperre 180'. Das Anzeigemittel 11 signalisiert eine sicher verriegelte Rückenlehne.

Um den Verriegelungszustand der Drehmomentsperre mittels dem Anzeigemittel 11 des Lehnenschlosses anzeigen zu können, nimmt das Signalmittel 7 des Lehnenschlosses den Verriegelungszustand der Drehmomentsperre als mechanisches Signal SI entgegen. Es wird mittels einem biegesteifen Bowdenkabel 18, das am Signalmittel 7 angeordnet ist, übertragen. Außerdem ist das Signalmittel 7 mittels einer Verbindungsstange 19 mit dem Anzeigemittel 11 verbunden.

Wird die Drehmomentsperre beispielsweise durch Verschmutzung oder andere Umstände nicht sicher im Mittellager verriegelt, obwohl das Lehnenschloss verriegelt ist, so verhindert das biegesteife Bowdenkabel 18, dass das Signalmittel 7 gedreht wird, bzw. dass die Verriegelungsklinke 2 von der Freigabeposition F in die Sicherungsposition S gedreht wird. Aufgrund der Verbindungsstange 19 wird am Anzeigemittel 11 angezeigt, dass die Lehne nicht vollständig verriegelt ist.

Auch wenn das Lehnenschloss nicht vollständig verriegelt ist, beispielsweise wenn die Verriegelungsklinke 2 nicht in die Sicherungsposition S gedreht ist, wird am Anzeigemittel 11 unabhängig vom Verriegelungszustand der Drehmomentsperre eine nicht sicher verriegelte Vorrichtung angezeigt, da das Signalmittel 7 aufgrund des Verstellmittels 9 am Betätigungsmittel 4 nicht zurückgestellt wird.

Durch das Anzeigemittel 11 beziehungsweise die Möglichkeit, mechanische Signale SO, Sl an weitere Vorrichtungen abzugeben oder entgegen zu nehmen, ist eine sehr sichere Bedienung der erfindungsgemäßen Vorrichtung durch den Nutzer möglich.

### Bezugszeichenliste:

- 1: Verriegelungshaken
- 2: Verriegelungsklinke
- 20: Kontur der Verriegelungsklinke
- 21: Nocken der Verriegelungsklinke
- 3: Grundplatte
- 33: Endanschlag
- 130: Prägung
- 4: Betätigungsbauteil
- 41: Ausnehmung des Betätigungsbauteils
- 5: Kraftmittel, beispielsweise (Zug-) Feder
- 51: Erstes Ende des Kraftmittels
- 52: Zweites Ende des Kraftmittels
- 6: Betätigungsmittel
- 61: Betätigungsvorrichtung
- 7: Signalmittel
- 71: Anformung des Signalmittels
- 8: Verriegelungsbolzen
- 9: Verstellmittel, beispielsweise Kulisse
- 10: Schiebeelement
- 101: Aufnahmebauteil
- 102: Halteblech
- 103: Vorsprung
- 104: Ausnehmung
- 105: Verbindungsprägung
- 106: Befestigungspunkt
- 107: Kunststoffbauteil
- 108: Klemmlasche
- 11: Anzeigemittel
- 12: Einbuchtungen und/oder Ausbuchtungen
- 13: Erster Anschlag des Verriegelungshakens
- 14: Zweiter Anschlag des Verriegelungshakens
- 15: Breite der Vorrichtung
- 16: Zweites Kraftmittel des Schiebeelementes
- 17: Hakenmaul
- 18: Biegesteifes Bowdenkabel
- 180, 180': Nicht verriegelter/verriegelter Verriegelungszustand Drehmomentsperre
- 19: Verbindungsstange
- V: Verriegelungsposition des Verriegelungshakens
- E: Entriegelungsposition des Verriegelungshakens
- S: Sicherungsposition der Verriegelungsklinke
- F: Freigabeposition der Verriegelungsklinke
- F1: Kraft auf den Verriegelungshaken beim Verriegeln
- F2: Rückwirkende Verformungskraft
- D1: Spaltmaß zwischen der Verriegelungsklinke und dem -haken beim Verriegeln
- D2: Spaltmaß in der Verriegelunsposition

## Patentansprüche

1. Vorrichtung zur Verriegelung und Entriegelung eines Verriegelungsbolzens (8) einer Lehne eines Kraftfahrzeugsitzes, mit einem Verriegelungshaken (1) und einem Betätigungsbauteil (4), wobei der Verriegelungshaken (1) in einer die Verriegelung sichernden Verriegelungsposition (V) kraft- und/oder formschlüssig mit dem Verriegelungsbolzen (8) zusammenwirkt und durch Drehen des Betätigungsbauteils (4) in eine die Verriegelung nicht sichernde Entriegelungsposition (E) drehbar ist, wobei der Verriegelungshaken (1) zumindest teilweise mit einem Kunststoff ummantelt ist, **dadurch gekennzeichnet, dass** die Ummantelung im Kontaktbereich des Verriegelungshakens (1) mit dem Verriegelungsbolzen (8) eine Prägung (130) aufweist, mittels derer das Spiel zwischen dem Verriegelungsbolzen (8) und dem Verriegelungshaken (1) in der Verriegelungsposition (V) reduziert ist.

2. Vorrichtung nach Anspruch 1, **dadurch gekennzeichnet, dass** die Vorrichtung ein Signalmittel (7) umfasst, mittels dem sie ein mechanisches Signal (SO, SI) abgeben und/oder entgegen nehmen kann, wobei das Signalmittel (7) dem Betätigungsbauteil (4) parallel geschaltet ist und mit diesem zusammenwirkt.

3. Vorrichtung nach Anspruch 2, **dadurch gekennzeichnet, dass** das mechanische Signal (SO, SI) die Verriegelungsposition (V) und/oder die Entriegelungsposition (E) des Verriegelungshakens (1) beinhaltet.

4. Vorrichtung nach einem der Ansprüche 2 oder 3, **dadurch gekennzeichnet, dass** sie mit einer weiteren Vorrichtung, insbesondere nach einem der vorherigen Ansprüche, parallel geschaltet ist, und dass das mechanische Signal (SO, SI) die Vorrichtungen synchronisiert.

5. Vorrichtung nach einem der Ansprüche 2 - 4, **dadurch gekennzeichnet, dass** sie ein Anzeigemittel (11) umfasst, mit dem das mechanische Signal (SO, SI) anzeigbar ist.

6. Vorrichtung nach einem der vorherigen Ansprüche, **dadurch gekennzeichnet, dass** der Verriegelungshaken (1) durch ein Kraftmittel (5) von der Verriegelungsposition (V) reversibel in die Entriegelungsposition (E) drehbar ist.

7. Vorrichtung nach einem der vorherigen Ansprüche, **dadurch gekennzeichnet, dass** sie eine Verriegelungsklinke (2) aufweist, die von einer Freigabeposition (F) in eine Sicherungsposition (S) reversibel verstellbar ist, und die in ihrer Sicherungsposition (S) den Verriegelungshaken (1) in seiner Verriegelungsposition (V) sichert, insbesondere bei einem Crash.

8. Vorrichtung nach Anspruch 7, **dadurch gekennzeichnet, dass** das Betätigungsbauteil (4) ein Verstellmittel (9) umfasst, welches beim Betätigen erst nach einer Drehung um einen Sicherheitswinkel die Verriegelungsklinke (2) freigibt.

9. Vorrichtung nach einem der Ansprüche 7 oder 8, **dadurch gekennzeichnet, dass** das Verstellen der Verriegelungsklinke (2) von der Freigabeposition (F) in die Sicherungsposition (S) durch ein mechanisches Signal (SI) einer weiteren Vorrichtung steuerbar ist.

10. Vorrichtung nach einem der vorherigen Ansprüche, **dadurch gekennzeichnet, dass** sie ein Schiebeelement (10) umfasst, mit dem das Spiel zwischen dem Verriegelungsbolzen (8) und dem Verriegelungshaken (1) in der Verriegelungsposition (V) reduzierbar ist.

11. Vorrichtung nach Anspruch 10, **dadurch gekennzeichnet, dass** das Schiebeelement (10) ein zweites Kraftmittel (16) umfasst, mittels dessen Kraft es in der Verriegelungsposition (V) des Verriegelungshakens (1) mit dem Verriegelungsbolzen (8) zusammenwirkt, wobei die Kraft des zweiten Kraftmittels (16) im wesentlichen unabhängig von der Umgebungstemperatur ist.

12. Kraftfahrzeugsitz, **dadurch gekennzeichnet, dass** er eine Vorrichtung nach einem der vorherigen Ansprüche aufweist.

## Claims

1. Device for locking and unlocking a locking pin (8) of a backrest of a motor vehicle seat, with a locking hook (1) and an actuating component (4), the locking hook (1) cooperating non-positively and/or positively with the locking pin (8), in a locked position (V) securing the locking, and by rotating the actuating component (4) being able to be rotated into an unlocked position (E) not securing the locking, wherein the locking hook (1) is at least partially encased with a plastics material, **characterized in that** the encasing, in the contact region of the locking hook (1) with the locking pin (8), comprises an embossing (130), by means of which the clearance between the locking pin (8) and the locking hook (1) is reduced in the locked position (V).

2. Device according to Claim 1, **characterized in that** the device comprises a signaling means (7), by means of which it is able to emit and/or receive a mechanical signal (SO, SI), wherein the signaling means (7) is connected in parallel with the actuating component (4) and cooperates therewith.

3. Device according to Claim 2, **characterized in that** the mechanical signal (SO, SI) includes the locked position (V) and/or the unlocked position (E) of the locking hook (1).

4. Device according to either of Claim 2 and 3, **characterized in that** it is connected in parallel with a further device, especially according to one of the preceding claims, and **in that** the mechanical signal (SO, SI) synchronizes the devices.

5. Device according to one of Claim 2-4, **characterized in that** it comprises a display means (11) with which the mechanical signal (SO, SI) may be displayed.

6. Device according to one of the preceding claims, **characterized in that** the locking hook (1) may be reversibly rotated by a force means (5) from the locked position (V) into the unlocked position (E).

7. Device according to one of the preceding claims, **characterized in that** it comprises a locking pawl (2) which may be reversibly adjusted from a release position (F) into a secured position (S) and which in its secured position (S) secures the locking hook (1) in its locked position (V) especially in the event of a crash.

8. Device according to Claim 7, **characterized in that** the actuating component (4) comprises an adjusting means (9) which, when actuated, only releases the locking pawl (2) after a rotation by a safety angle.

9. Device according to either of Claim 7 and 8, **characterized in that** the adjustment of the locking pawl (2) from the release position (F) into the secured position (S), may be controlled by a mechanical signal (SI) of a further device.

10. Device according to one of the preceding claims, **characterized in that** it comprises a sliding element (10) with which the clearance between the locking pin (8) and the locking hook (1) may be reduced in the locked position (V).

11. Device according to Claim 10, **characterized in that** the sliding element (10) comprises a second force means (16) by means of the force thereof cooperating in the locked position (V) of the locking hook (1) with the locking pin (8), the force of the second force means (16) being substantially independent of the ambient temperature.

12. Motor vehicle seat, **characterized in that** it comprises a device according to one of the preceding claims.

## Revendications

1. Dispositif pour verrouiller et déverrouiller un boulon de verrouillage (8) d'un dossier d'un siège de véhicule automobile, comprenant un crochet de verrouillage (1) et un composant d'actionnement (4), le crochet de verrouillage (1), dans une position de verrouillage (V) fixant le verrouillage, coopérant par engagement par force et/ou par correspondance de formes avec le boulon de verrouillage (8) et pouvant tourner par rotation du composant d'actionnement (4) dans une position de déverrouillage (E) ne fixant pas le verrouillage, le crochet de verrouillage (1) étant au moins en partie revêtu d'un plastique, **caractérisé en ce que** le revêtement présente, dans la région dans laquelle le crochet de verrouillage (1) vient en contact avec le boulon de verrouillage (8), une empreinte (130), au moyen de laquelle le jeu entre le boulon de verrouillage (8) et le crochet de verrouillage (1) dans la position de verrouillage (V) est réduit.

2. Dispositif selon la revendication 1, **caractérisé en ce que** le dispositif comprend un moyen de signal (7) au moyen duquel il peut émettre un signal mécanique (SO, SI) et/ou le recevoir, le moyen de signal (7) étant branché parallèlement au composant d'actionnement (4) et coopérant avec celui-ci.

3. Dispositif selon la revendication 2, **caractérisé en ce que** le signal mécanique (SO, SI) contient la position de verrouillage (V) et/ou la position de déverrouillage (E) du crochet de verrouillage (1).

4. Dispositif selon l'une quelconque des revendications 2 ou 3, **caractérisé en ce qu'**il est monté en parallèle avec un dispositif supplémentaire, en particulier selon l'une quelconque des revendications précédentes, et **en ce que** le signal mécanique (SO, SI) synchronise les dispositifs.

5. Dispositif selon l'une quelconque des revendications 2 à 4, **caractérisé en ce qu'**il comprend un moyen indicateur (11) avec lequel le signal mécanique (SO, SI) peut être indiqué.

6. Dispositif selon l'une quelconque des revendications précédentes, **caractérisé en ce que** le crochet de verrouillage (1) peut être tourné de manière réversible de la position de verrouillage (V) dans la position de déverrouillage (E) par un moyen de force (5).

7. Dispositif selon l'une quelconque des revendications précédentes, **caractérise en ce qu'**il présente un cliquet de verrouillage (2) qui peut être déplacé de manière réversible d'une position de libération (F) dans une position de fixation (S), et qui, dans sa position de fixation (S), fixe le crochet de verrouillage (1) dans sa position de verrouillage (V), en particulier en cas de collision.

8. Dispositif selon la revendication 7, **caractérisé en ce que** le composant d'actionnement (4) comprend un moyen de réglage (9) qui, lors de l'actionnement, libère le cliquet de verrouillage (2) seulement après une rotation autour d'un angle de sécurité.

9. Dispositif selon l'une quelconque des revendications 7 ou 8, **caractérisé en ce que** le réglage du cliquet de verrouillage (2) de la position de libération (F) dans la position de fixation (S) peut être commandé par un signal mécanique (SI) d'un dispositif supplémentaire.

10. Dispositif selon l'une quelconque des revendications précédentes, **caractérisé en ce qu'**il comprend un élément coulissant (10) avec lequel le jeu entre le boulon de verrouillage (8) et le crochet de verrouillage (1) dans la position de verrouillage (V) peut être réduit.

11. Dispositif selon la revendication 10, **caractérisé en ce que** l'élément coulissant (10) comprend un deuxième moyen de force (16) au moyen de la force duquel il coopère, dans la position de verrouillage (V) du crochet de verrouillage (1), avec le boulon de verrouillage (8), la force du deuxième moyen de force (16) étant sensiblement indépendante de la température ambiante.

12. Siège de véhicule automobile, **caractérisé en ce qu'**il présente un dispositif selon l'une quelconque des revendications précédentes.
